# EUROPÄISCHE PATENTANMELDUNG

(11) **EP 3 006 828 A1**
(43) Veröffentlichungstag der Anmeldung: **13.04.2016**
(21) Anmeldenummer: 15187829.5
(22) Anmeldetag: 01.10.2015
(51) Int. Cl.: F23J 15/02, F23J 15/06, F28F 19/01, F28D 21/00

(54) **ABGASWÄRMEÜBERTRAGER MIT INTEGRIERTER FILTERKOMBINATION**

(30) Priorität: 09.10.2014 DE 102014220472
(71) Anmelder: Vaillant GmbH, 42859 Remscheid (DE)
(72) Erfinder: Lis, Raimund, 42369 Wuppertal (DE); Reinert, Andreas, 58455 Witten (DE); Heiler, Christian, 58456 Witten-Herbede (DE); Noll, Wolfgang, 42113 Wuppertal (DE)
(74) Vertreter: Hocker, Thomas

(57) **Zusammenfassung**

Bei einem Abgaswärmeübertrager (6) zur Übertragung von thermischer Energie eines Gases auf ein zweites Medium ist ein Chromfilter (1) mit dem Abgaswärmeübertrager (6) in einer Führung angeordnet, wobei der Chromfilter (1) den gesamten Querschnitt der Führung (4) ausfüllt.

## Beschreibung

Die Erfindung betrifft einen Abgaswärmeübertrager mit integrierter Filterfunktion zur Abtrennung von Chrom-Verbindungen aus Abgasen für eine Energieerzeugungseinheit.

In Energieerzeugungseinheiten wie z.B. dezentral eingesetzten Brennern, Stirlingmaschinen oder Brennstoffzellensystemen werden hochwarmfeste Edelstähle und Nickelbasislegierungen in brenngas-, luft- und insbesondere abgasführenden Bauteilen verwendet. Hochwarmfeste Edelstähle und Nickelbasislegierungen enthalten in großen Mengen Chrom, welcher eine schützende Oxiddeckschicht ausbildet, um so das Bauteil vor Hochtemperaturkorrosion zu schützen. Diese Deckschicht kann jedoch durch die Atmosphäre, z.B. durch einen erhöhten Wasserdampfpartialdruck angegriffen werden und Chromverbindungen können als Chromhydroxide aus dem Bauteil ausgetragen werden. Abhängig von der Temperatur, vom Sauerstoff- und Wasserdampfpartialdruck bilden sich dabei aus der schützenden Cr₂O₃-Deckschicht metastabile gasförmige Chrom(oxy-) hydroxide (Chromabdampfung). Auch durch zyklische thermische Beanspruchung kann es zu Mikrorissen in der schützenden Deckschicht kommen und Chromoxide können abplatzen und so ausgetragen werden. Zum einen geht die schützende Deckschicht folglich verloren. Zum anderen können human-toxische und wassergefährdende Chromverbindungen direkt oder mit dem Kondensat aus der Energieerzeugungseinheit ausgetragen werden. Chromverbindungen können auch mit dem Brennstoff in das Rauchgas gelangen, z.B. können Kohle und biogene Brennstoffe größere Mengen Chrom enthalten. Während des Verbrennungsprozesses werden diese Chromverbindungen in Chromoxide umgesetzt. Dabei können Chrom(VI)-haltige Verbindungen entstehen.

Es ist zwar aus Kraftwerksprozessen bekannt, diese Chrom(VI)-Verbindungen in Wäschern (z.B. Amin-Wäsche) auszufällen und mit dem Waschwasser aus dem Rauchgas zu entfernen. Anschließend wird das Waschwasser mittels Anionen- und Kationenaustauschern von den Chromverbindungen gereinigt und dem Rauchgaswäscher wieder zugeführt. Naßchemische Verfahren erfordern in der Regel einen hohen apparativen Aufwand, weshalb diese Verfahren für den Einsatz in kleinen dezentralen Energieerzeugungsanlagen nur bedingt oder gar nicht eingesetzt werden können bzw. sich in diesen nicht kostentechnisch darstellen lassen.

Es ist daher Aufgabe der Erfindung, einen einfachen, kompakten und kostengünstige Wärmetauscher-Filterkombination zum Abtrennung u.a. von Chrom(VI)-Verbindungen aus Abgasen an Energieerzeugungsanlagen, insbesondere an kleinen dezentral verwendeten Energieerzeugungsanlagen wie Brennstoffzellen, Kraft-Wärme-Kopplungsanlagen mit z.B. Stirling-Motoren oder Brennern bereitzustellen.

Diese Aufgabe wird gemäß den Merkmalen des Anspruchs 1 gelöst. Ist ein Chromfilter mit dem Abgaswärmeübertrager in einer Führung angeordnet, wobei der Chromfilter einen gesamten Querschnitt der Führung ausfüllt, so müssen die gesamten Abgase durch den Chromfilter strömen und dabei Chrom aufnehmen. Die Führung gewährleistet, dass keine Bypassströmungen entstehen können.

Vorteilhafte Ausgestaltungen ergeben sich durch die Merkmale der abhängigen Ansprüche.

Ist der Chromfilter oberhalb, innerhalb oder unterhalb des Abgaswärmeübertrager angeordnet, so lässt sich je nach Position und Eingangstemperatur des wärmeabgebenden Gases die Prozesstemperatur bestimmen. Besonders vorteilhaft ist der Filter im Abgaswärmeübertrager integriert. Diese Abgas-Filterkombination ist so im Abgaswärmeübertrager angeordnet, dass sich im Betrieb in der eine Temperatur von 180 °C bis 600 °C und bevorzugt von 300 °C bis 500 °C einstellt. Dieser Temperaturbereich begünstigt die Umwandlung von Chrom(VI)-Verbindungen zu Chrom(III)-Verbindungen thermodynamisch.

Der Filter innerhalb des Abgaswärmeübertragers kann aus einem Metallgewebe, einem Metallschaum, einer Metallwabe oder einem Keramikschaum bestehen. Dies gewährleistet einerseits eine große wirksame Oberfläche und andererseits eine niedrige Strömungsgeschwindigkeit des zu filternden Abgases und damit eine lange Verweilzeit im Filter.

Die Integration des Filters in den Abgaswärmeübertrager ist so gestaltet, dass das Filterelement fest mit dem Abgaswärmeübertrager verbunden ist. Der Filter wird dabei so bemessen, dass über den gesamten Lebenszyklus eine definierte Cr.-Aufnahme ohne Wechselintervall erfolgt.

Die Integration des Filters in den Abgaswärmeübertrager ist so gestaltet, dass das Filterelement für Wartungszwecke auch über geeignete Schnittstellen herausnehmbar ist. Dies ist z.B. sinnvoll, wenn die aufzunehmende Cr.-Menge größer ist als der Filter aufnehmen kann.

Die Filter-Abgaswärmeübertragerkombination ist so gestaltet, dass geringe Druckverluste abgasseitig ermöglicht werden.

Die Filter-Abgaswärmeübertragerkombination ist so gestaltet, dass für die Wärmeübertragung von Abgas auf Heizungswasser ein hoher Turbulenzgrad ermöglicht wird und somit eine hohe Effizienz erreicht werden kann.

Die Filter-Abgaswärmeübertragerkombination ist so gestaltet, dass das Kühlmittel auf der Sekundärseite sowohl Wasser (Heizwasser) als auch Luft sein kann.

Der Filter im Abgaswärmeübertrager ist so gestaltet, dass dieser Formschlüssig mit dem Abgaswärmeübertrager oder formschlüssig mit dem Deckel des Abgaswärmeübertragers verbunden ist.

Die Filter-Abgaswärmeübertragerkombination ist so gestaltet, dass eine Beladungsanzeige der Cr.-Beladung z.B. über eine optische Veränderung der Oberfläche (z.B. Farbe, Ablagerungen..) ermöglicht wird.

Die Filter-Abgaswärmeübertragerkombination ist so gestaltet, dass unterhalb der Filtereinheit ein Leerraum zur Aufnahme von Chromoxid-Abplatzungen aus der Filtereinheit vorgesehen ist. In diesem Leerraum können sich die Ableitungen sammeln und im Rahmen einer Wartung entfernt werden oder über einen definierten Bauraum dauerhaft verbleiben können.

Bei der Energieerzeugungseinheit handelt es sich bevorzugt um eine Brennstoffzelle, ein Brenner oder eine Kraft-Wärme-Kopplungsanlage auf Basis einer Stirlingmaschine, die jeweils dezentral in einem Wohngebäude oder Gewerbebetrieb etc. untergebracht sind. Eine derartige Energieumwandlungseinheit, bevorzugt eine erfindungsgemäße Brennstoffzelle weist den zuvor beschriebenen erfindungsgemäßen Filter auf.

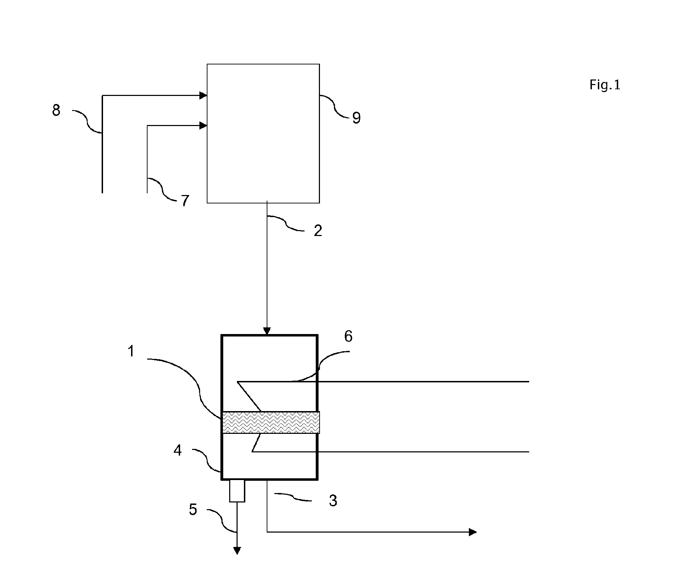

Die Figur zeigt eine Energiewandlungseinheit 9, mit einer Luftzufuhr 7 und einer Brennstoffzufuhr 8. Das heiße Abgas 2 strömt in eine Führung 4, in der sich ein Abgaswärmeübertrager 6 du ein Chromfilter 1 befinden. Der Chromfilter 1 ist hierbei derart in den Abgaswärmeübertrager 6 integriert, dass die Abgase vor Erreichen des Chromfilters 1 abgekühlt werden und auch danach weiter abgekühlt werden. Chromfilter 1 und Abgaswärmeübertrager 6 überdecken hierbei zumindest an einer Stelle den gesamten Querschnitt der Führung 4, um Bypassströme zu vermeiden. Beim Abkühlen der Abgase entsteht Kondensat 5, welches gesondert abgeführt wird, während das kalte Abgas über eine Abgasführung 3 geleitet wird.

### Bezugszeichenliste

- 1: Chromfilter
- 2: Heißes Abgas
- 3: Abgasführung
- 4: Führung
- 5: Kondensat
- 6: Abgaswärmeübertrager
- 7: Luftzufuhr
- 8: Brennstoffzufuhr
- 9: Energiewandlungseinheit

## Patentansprüche

1. Abgaswärmeübertrager (6) zur Übertragung von thermischer Energie eines Gases auf ein zweites Medium, **dadurch gekennzeichnet, dass** ein Chromfilter (1) mit dem Abgaswärmeübertrager (6) in einer Führung angeordnet ist, wobei der Chromfilter (1) einen gesamten Querschnitt der Führung (4) ausfüllt.

2. Abgaswärmeübertrager (6) nach Anspruch 1, **dadurch gekennzeichnet, dass** der Chromfilter (1) oberhalb, innerhalb oder unterhalb des Abgaswärmeübertrager (6) angeordnet ist.

3. Abgaswärmeübertrager (6) nach Anspruch 1 oder 2, **dadurch gekennzeichnet, dass** der Chromfilter (1) aus einem Metallgewebe, einem Metallschaum, einer Metallwabe oder einem Keramikschaum besteht.

4. Abgaswärmeübertrager (6) nach Anspruch 1 bis 3, **dadurch gekennzeichnet, dass** der Chromfilter (1) herausnehmbar ist.

5. Abgaswärmeübertrager (6) nach Anspruch 1 bis 4, **dadurch gekennzeichnet, dass** der Abgaswärmeübertrager (6) einen gesamten Querschnitt der Führung (4) ausfüllt.

6. Abgaswärmeübertrager (6) nach Anspruch 1 bis 5, **dadurch gekennzeichnet, dass** eine Beladungsanzeige zur Cr.-Beladung des Chromfilters (1), insbesondere über optische Veränderung der Oberfläche, vorhanden ist.

7. Abgaswärmeübertrager (6) nach Anspruch 1 bis 6, **dadurch gekennzeichnet, dass** unterhalb des Chromfilters (1) ein Leerraum zur Aufnahme von Chromoxid-Abplatzungen vorgesehen ist.
